# EUROPÄISCHE PATENTSCHRIFT

(11) **EP 3 078 563 B1**
(45) Veröffentlichungstag und Bekanntmachung des Hinweises auf die Patenterteilung: **11.12.2019**
(21) Anmeldenummer: 16162756.7
(22) Anmeldetag: 30.03.2016
(51) Int. Cl.: B61D 17/22, B62D 47/02, B60D 5/00

(54) **ÜBERGANG ZWISCHEN ZWEI DURCH EINE GELENKIGE VERBINDUNG MITEINANDER VERBUNDENER FAHRZEUGE**
TRANSITION BETWEEN TWO VEHICLES WITH AN ARTICULATED CONNECTION
PASSAGE ENTRE DEUX VÉHICULES RELIÉS ENTRE EUX DE MANIÈRE ARTICULÉE

(30) Priorität: 11.04.2015 DE 202015002695 U
(43) Veröffentlichungstag der Anmeldung: 12.10.2016
(73) Patentinhaber: Hübner GmbH & Co. KG, 34123 Kassel (DE)
(72) Erfinder: Baake, Achim, 34479 Breuna (DE)
(74) Vertreter: Patentanwälte Walther Hinz Bayer PartGmbB

(56) Entgegenhaltungen:
- WO-A1-95/24331
- DE-U1- 8 910 106

## Beschreibung

Die Erfindung betrifft einen Übergang zwischen zwei durch eine gelenkige Verbindung miteinander verbundener Fahrzeuge, umfassend einen die beiden Fahrzeuge verbindenden Balg, wobei der Balg eine Übergangseinrichtung tunnelartig umspannt.

Aus der WO 95/24 331 A1 ist ein Übergang zwischen zwei gelenkig miteinander verbundenen Schienenfahrzeugen bekannt, wobei die Schienenfahrzeuge zwei übereinander angeordnete Plattformen aufweisen. Die Plattformen sind durch einen in der Ansicht U-förmigen Balg überspannt. Im Bereich der Seitenwände des Balges ist jeweils ein sich längs erstreckender Stützstab vorgesehen, wobei sich auf den Stützstäben der Balg abstützt.

Ein Übergang der eingangs genannten Art ist aus dem Stand der Technik hinreichend bekannt. Hiebei ist der Balg, der die Übergangseinrichtung tunnelartig umgibt, als Wellen- oder als Faltenbalg ausgebildet. Die Übergangseinrichtung selbst kann als Brücke, z. B. als Gliederbrücke ausgebildet sein, oder aber als Plattform mit einem Drehteller. Der die Übergangseinrichtung tunnelartig umspannende Balg weist unabhängig davon, ob es sich um einen Falten- oder einen Wellenbalg handelt eine Mehrzahl von hintereinander angeordneten Balgrahmen auf, wobei die Balgrahmen im Querschnitt U-förmig ausgebildet sind, wobei durch die beiden Schenkel des U-förmigen Balgrahmens zwei Streifen eines Balgmaterials klemmend erfasst werden. Die Streifen des Balgmaterials umfassen üblicherweise einen sogenannten Festigkeitsträger, beispielsweise ein Gewebe, das zumindest einseitig, vorzugsweise allerdings von beiden Seiten mit einer Elastomerschicht beschichtet ist.

Bei der Ausbildung der Bälge, die sich zwischen den Stirnseiten beider gelenkig miteinander verbundenen Fahrzeuge befinden, existieren zwei unterschiedliche Balgarten, nämlich zum einen kann insbesondere bei kurzen Übergängen der Abstand zwischen den beiden Fahrzeugen durch einen einzigen Balg überbrückt werden. Bei größeren Zwischenräumen kommen zum anderen häufig zweigeteilte Bälge zum Einsatz, dass heißt, die beiden Balghälften sind durch einen Mittelrahmen miteinander verbunden. Eine solche Mittelrahmenverbindung ist im Übrigen auch bei verschiedenen Schienenfahrzeugen bekannt.

Insbesondere bei Gelenkbussen aber auch bei Schienenfahrzeugen besteht die gelenkige Verbindung zwischen den beiden Fahrzeugen aus einem sogenannten Fahrzeuggelenk. Derartige Fahrzeuggelenke sind anfällig gegenüber Verschmutzung, weshalb üblicherweise der Balg nicht nur die Übergangseinrichtung tunnelartig umspannt, sondern der Balg auf der Unterseite auch noch unterhalb des Fahrzeuggelenks vorbeigeführt wird. Das heißt, dass durch den Balg das Fahrzeuggelenk gegen Verschmutzung geschützt wird. In Verbindung mit dem Ziel der Niederflurigkeit des Fahrzeuges werden dann Abstände zwischen der Unterseite des Balges und der Straße bzw. der Schiene von etwa 150 mm gemessen, was insbesondere dann, wenn der Balg aufgrund z. B. unebener Wegstrecke schwingt, es zu einem Kontakt des Balges mit dem Boden oder den Schienen kommt, und der Balg insofern Schaden nimmt. Um bei einem zweigeteilten Balg, also einem Balg aus zwei Balghälften, ein Durchhängen zu vermeiden, ist bekannt, auf dem Dach des Fahrzeugs einen sogenannten Galgen anzuordnen, an dem der Balg etwa mittig aufgehängt ist. Allerdings wird nach dem Stand der Technik der Balg durch den Galgen lediglich am Mittelrahmen erfasst. Die Balghälften selbst können weiterhin durchhängen und auch durchschwingen mit der Folge, dass der Balg im Bereich der Balghälften mit dem Untergrund in Kontakt gerät und Schaden nimmt.

In diesem Zusammenhang ist aus der DE 89 10 106 U1 ein Übergang bekannt, der sowohl die Übergangseinrichtung als auch das Fahrzeuggelenk tunnelförmig umspannt. Unterhalb des Balges ist ein Biegestab vorgesehen, der sich längs zwischen den beiden durch den Balg verbundenen Wagenkästen erstreckt. Auf dem Biegestab, der die Querbewegung bei Kurvenfahrt steuern soll, stützt sich der Balg darüber hinaus auch ab.

Die der Erfindung zugrunde liegende Aufgabe besteht demzufolge darin, den Verschleiß des Balges im Bereich des Bodens durch Durchhängen des Balges zu vermindern.

Zur Lösung der Aufgabe wird erfindungsgemäß vorgeschlagen, dass die Übergangseinrichtung auf der Unterseite mindestens eine Aufhängeeinrichtung zur Befestigung mindestens eines Balgrahmens aufweist. Die Übergangseinrichtung kann hierbei als Brücke oder als Plattform mit Drehteller ausgebildet sein, wobei beispielsweise an dem Drehteller an der Unterseite die Aufhängeeinrichtung angeordnet ist, die in Verbindung mit mindestens einem, vorzugsweise allerdings einer Mehrzahl der Balgrahmen des Balges, derart in Verbindung steht, dass durch die Aufhängeeinrichtung ein Durchhängen des Balges vermieden wird. Durch diese Art der Aufhängung des Balges kann vom Grundsatz her auch der Galgen eingespart werden.

Vorteilhafte Merkmale und Ausgestaltungen der Erfindung ergeben sich aus den Unteransprüchen.

So ist insbesondere vorgesehen, dass die Aufhängeeinrichtung ein Aufhängeglied umfasst, an dem mindestens ein Aufhänger für den mindestens einen Balgrahmen angeordnet ist. Das Aufhängeglied befindet sich auf der Unterseite der Übergangseinrichtung und dient der Aufnahme mindestens eines Aufhängers, um mindestens einen Balgrahmen in Wesentlichem konstanten Abstand zur Oberfläche der Straße oder der Schiene zu halten, und um insbesondere ein Durchschwingen des Balges nach unten zu verhindern.

Das Aufhängeglied ist insbesondere als sich parallel zur Längsachse des Fahrzeugs an der Unterseite der Übergangseinrichtung erstreckende Aufhängestange ausgebildet, wobei vorteilhaft die Mehrzahl der Aufhänger verschieblich, ähnlich einer Gardinenstange, durch die Aufhängeschiene aufnehmbar sind. Hierdurch wird erreicht, dass die Aufhängeeinrichtung der sich verändernden Balgform, beispielsweise bei Durchfahren einer Kurve, folgen kann. Das heißt, dass die einzelnen Balgrahmen in ihrer Bewegung bei jedweder Fahrbewegung nicht durch die Aufhängeeinrichtung behindert werden.

Zwischen den Fahrzeugen befindet sich üblicherweise die gelenkige Verbindung, also beispielsweise ein Fahrzeuggelenk. Das Fahrzeuggelenk ist in der Mittellängsachse des Fahrzeugs angeordnet. Vorteilhaft ist zu jeder Seite der gelenkigen Verbindung eine Aufhängeeinrichtung angeordnet, insbesondere ist zu jeder Seite des Fahrzeuggelenks eine Aufhängestange an der Unterseite der Übergangseinrichtung befestigt, sodass ein Durchhang des Balges über die gesamte Länge und Breite des Balges sicher vermieden werden kann. Die Aufhängeeinrichtung selbst umfasst des Weiteren eine vorzugsweise mehrere an den Balgrahmen, der Übergangseinrichtung zugerichtet, angeordnete Schienen, an denen jeweils mindestens ein Aufhänger anordbar ist. Das heißt, dass die Aufhänger nicht nur an der Aufhängestange längs verschieblich angeordnet sind, sondern auch an den Schienen, die an den jeweiligen Balgrahmen befestigt sind. Zur Befestigung der Schiene an dem Balgrahmen ist vorgesehen, dass die Schiene zu beiden Enden Füße aufweist, die durch die Schenkel des im Querschnitt nach Art eines U-Profils ausgebildeten Balgrahmen klemmend erfassbar sind. Es wurde bereits darauf hingewiesen, dass die Balgrahmen Stoffstreifen zur Bildung der Falte oder der Welle klemmend erfassen, wobei nunmehr auf diesem Wege auch die Füße der Schiene klemmbar erfassbar sind.

Die Fixierung des Aufhängers an der Schiene kann beispielsweise durch einen Karabinerhaken erfolgen.

Um ein Klappern der Aufhängeeinrichtung zu verhindern, kann vorgesehen sein, den Aufhänger als Federglied, beispielsweise als Zugfeder auszubilden oder auch als gummielastischen Körper.

Anhand der Zeichnungen wird die Erfindung beispielhaft näher erläutert.
- Fig. 1: zeigt schematisch durch einen Übergang miteinander verbundene Fahrzeuge;
- Fig. 2: zeigt einen Schnitt gemäß der Linie II-II aus Fig. 1;
- Fig. 3: zeigt die Aufhängeeinrichtung in einer perspektivischen Ansicht von unten in einer ersten Ausführungsform;
- Fig. 4: zeigt die Aufhängeeinrichtung einer perspektivischen Ansicht von unten in einer zweiten Ausführungsform;
- Fig. 5: zeigt eine Ansicht von oben auf die Plattform, wobei jedoch ein Teil der Plattform, um die Balgrahmen sichtbar werden zu lassen, weggelassen worden ist.

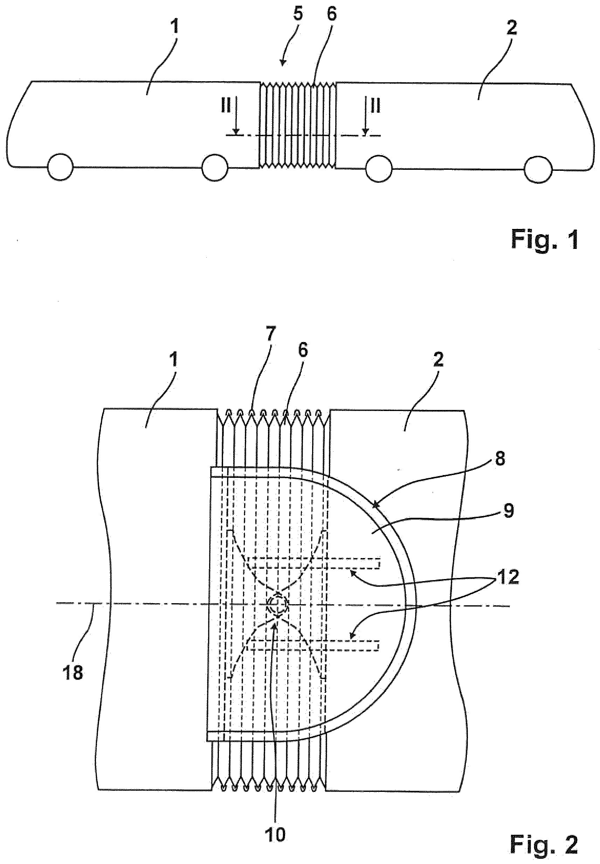

Fig. 1 zeigt zwei durch einen Übergang 5 miteinander verbundene Fahrzeuge 1, 2, wobei der Balg das Bezugszeichen 6 aufweist. Der Balg 6 umspannt nicht nur die Übergangseinrichtung, sondern auch das die beiden Fahrzeuge 1 und 2 verbindende Gelenk (Fig. 2). Der Balg 6, der im vorliegenden Fall als Faltenbalg dargestellt ist, weist tunnelförmig oder kastenförmig umlaufende Balgrahmen 7 auf.

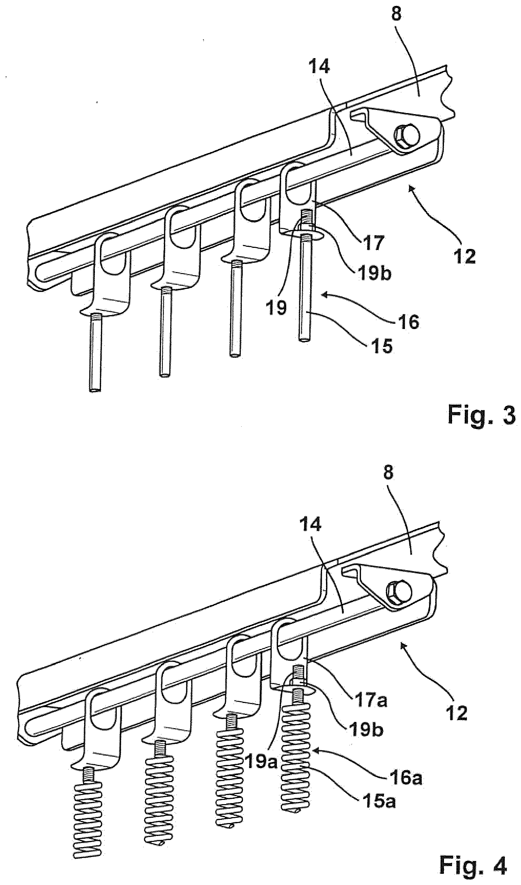

Das Ziel der Erfindung besteht nun darin, diese Balgrahmen 7 im Bodenbereich derart zu stabilisieren, dass ein Durchhängen des Balges bzw. auch ein Durchschwingen des Balges vermieden werden kann. Die beiden Fahrzeuge 1 und 2 sind durch das Fahrzeuggelenk 10 miteinander verbunden. Oberhalb des Fahrzeuggelenkes 10 befindet sich die Übergangseinrichtung in Form der Plattform 8 mit dem Drehteller 9. Auf der Unterseite der Plattform 8 bzw. des Drehtellers 9 befinden sich zu beiden Seiten des Fahrzeuggelenks 10 die beiden Aufhängeeinrichtungen 12. Die beiden Aufhängeeinrichtungen 12 erstrecken sich hierbei parallel zur Mittellängsachse 18 des Fahrzeuges. Die Ausbildung der Aufhängeeinrichtung 12 in zwei Ausführungsformen ergibt sich nunmehr in Anschauung der Fig. 3 und der Fig. 4.

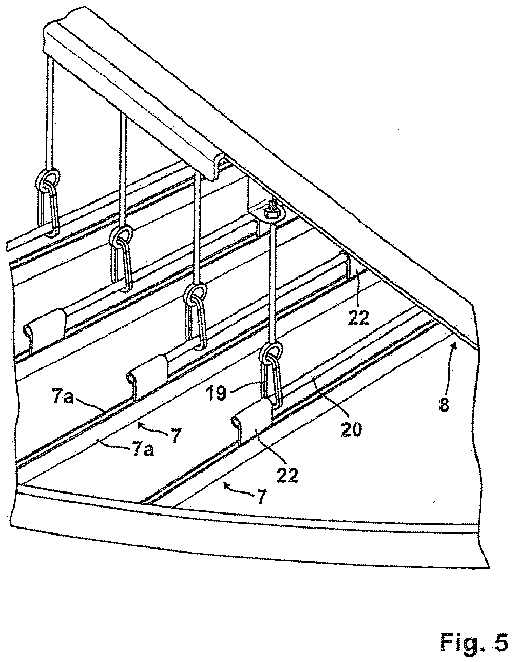

Bei der Ausführungsform gemäß Fig. 3 ist erkennbar, dass die Aufhängeeinrichtung 12 die an der Unterseite der Plattform angeordnete Aufhängestange 14 aufweist. An der Aufhängestange 14 befinden sich eine Mehrzahl von nebeneinander angeordneten Ösen 17 der Aufhänger 16, wobei eine jede Öse eine Verbindungsstange 15 aufweist, die, wie sich dies aus Fig. 5 ergibt, durch einen Karabinerhaken 19 mit der Schiene 20 verbunden ist. Die Schiene 20 wird durch die zu beiden Enden der Schiene 20 angeordneten Füße 22 mit dem Balgrahmen 7 klemmend verbunden. Im Einzelnen wird hierbei der Fuß 22 durch die Schenkel 7a des im Querschnitt U-förmig ausgebildeten Balgrahmens 7 klemmend erfasst.

Die Ausführungsform gemäß Fig. 4 unterscheidet sich von der gemäß Fig. 3 dadurch, dass hier der mit 16a bezeichnete Aufhänger anstelle der Verbindungsstange 15 eine Zugfeder 15a aufweist, die durch eine Öse 17a mit der Aufhängestange 14 der Aufhängeeinrichtung 12 verbunden ist.

Die Ösen 17, 17a nehmen den in der Lage veränderlichen Aufhänger auf. Hierzu ist die Verbindungsstange 15 oder die Feder 15a endseitig mit einem Gewindestift 19, 19a, sowie einer Mutter 19b versehen.

Dadurch, dass die Aufhängestange 14 parallel zur Mittellängsachse 18 des Fahrzeugs verläuft, hingegen die Schienen 20 im Winkel von etwa 90° quer dazu, also parallel zu den Balgrahmen, wird erreicht, dass die Balgrahmen jeder Fahrbewegung des Fahrzeuges, also insbesondere Knick-, Nick- und Wankbewegungen durchaus nachgeben können.

### Bezugszeichenliste:

- 1: Fahrzeug
- 2: Fahrzeug
- 5: Übergang
- 6: Balg
- 7: Balgrahmen
- 7a: Schenkel
- 8: Plattform
- 9: Drehteller
- 10: Fahrzeuggelenk
- 12: Aufhängeeinrichtung
- 14: Aufhängestange
- 15: Verbindungsstange
- 15a: Zugfeder
- 16: Aufhänger
- 16a: Aufhänger
- 17: Öse
- 17a: Öse
- 18: Mittellängsachse
- 19: Karabinerhaken
- 19: Gewindestift
- 19a: Gewindestift
- 19b: Mutter
- 20: Schiene
- 22: Fuß

## Patentansprüche

1. Übergang zwischen zwei durch eine gelenkige Verbindung miteinander verbundener Fahrzeuge (1, 2), umfassend einen die beiden Fahrzeuge (1, 2) verbindenden Balg (6), wobei der Balg (6) eine Übergangseinrichtung, zum Beispiel als Brücke, insbesondere als Gliederbrücke oder als Plattform mit einem Drehteller, tunnelförmig umspannt,
**dadurch gekennzeichnet,**
**dass** die Übergangseinrichtung an der Unterseite mindestens eine Aufhängeeinrichtung (12) zur Befestigung mindestens eines Balgrahmens (7) im Bodenbereich aufweist.

2. Übergang nach Anspruch 1,
**dadurch gekennzeichnet,**
**dass** die Aufhängeeinrichtung (12) ein Aufhängeglied umfasst, an dem mindestens ein Aufhänger (16, 16a) für den mindestens einen Balgrahmen (7) angeordnet ist.

3. Übergang nach Anspruch 1 oder 2,
**dadurch gekennzeichnet,**
**dass** das Aufhängeglied als Aufhängestange (14) ausgebildet ist.

4. Übergang nach Anspruch 2 oder 3,
**dadurch gekennzeichnet,**
**dass** der Aufhänger (16, 16a) verschieblich durch die Aufhängestange (14) aufnehmbar ist.

5. Übergang nach einem der Ansprüche 3 oder 4,
**dadurch gekennzeichnet,**
**dass** die Aufhängestange (14) sich parallel zur Mittellängsachse (18) des Fahrzeugs (1, 2) an der Übergangseinrichtung erstreckt.

6. Übergang nach Anspruch 5,
**dadurch gekennzeichnet,**
**dass** die Aufhängestange (14) neben der gelenkigen Verbindung verläuft.

7. Übergang nach Anspruch 6,
**dadurch gekennzeichnet,**
**dass** zu jeder Seite der gelenkigen Verbindung eine Aufhängestange (14) an der Unterseite der Übergangseinrichtung angeordnet ist.

8. Übergang nach einem der voranstehenden Ansprüche,
**dadurch gekennzeichnet,**
**dass** die Aufhängeeinrichtung eine am Balg (6), der Übergangseinrichtung zugerichtet, angeordnete Schiene (20) umfasst, an der der Aufhänger (16, 16a) anordbar ist.

9. Übergang nach Anspruch 8,
**dadurch gekennzeichnet,**
**dass** der Aufhänger (16, 16a) durch einen Karabinerhaken (19) mit der Schiene (20) verbindbar ist.

10. Übergang nach einem der Ansprüche 2 bis 9,
**dadurch gekennzeichnet,**
**dass** der Aufhänger (16, 16a) ein Federglied aufweist.

11. Übergang nach Anspruch 10,
**dadurch gekennzeichnet,**
**dass** das Federglied als Zugfeder (15a) ausgebildet ist.

12. Übergang nach einem der Ansprüche 8 bis 11,
**dadurch gekennzeichnet,**
**dass** der Balgrahmen (7) im Querschnitt nach Art eines U-Profils ausgebildet ist, wobei die Schiene (20) zu beiden Enden Füße (22) aufweist, die durch die Schenkel (7a) des U-Profils klemmend erfasst sind.

## Claims

1. A passage between two vehicles (1, 2) that are connected to one another by an articulated connection, including a bellows (6) connecting the two vehicles (1, 2), wherein the bellows (6) spans a passage device, for example a bridge, in particular an articulated bridge or a platform with a rotary plate, in a tunnel-shaped manner,
**characterized in that**
the passage device comprises at least one suspension device (12) on its bottom side for fastening at least one bellows frame (7) in the floor area.

2. The passage according to claim 1,
**characterized in that**
the suspension device (12) includes a suspension member, on which at least one hanger (16, 16a) for the at least one bellows frame (7) is disposed.

3. The passage according to claim 1 or 2,
**characterized in that**
the suspension member is formed as a hanger rod (14).

4. The passage according to claim 2 or 3,
**characterized in that**
the hanger (16, 16a) can be displaceably received by the hanger rod (14).

5. The passage according to claim 3 or 4,
**characterized in that**
the hanger rod (14) extends on the passage device parallel to the centre longitudinal axis (18) of the vehicle (1, 2).

6. The passage according to claim 5,
**characterized in that**
the hanger rod (14) runs next to the articulated connection.

7. The passage according to claim 6,
**characterized in that**
a hanger rod (14) is disposed on each side of the articulated connection on the bottom side of the passage device.

8. The passage according to one of the afore-mentioned claims,
**characterized in that**
the suspension device includes a rail (20), on which the hanger (16, 16a) can be disposed, and that is disposed on the bellows (6) in such a manner that it is oriented toward the passage device.

9. The passage according to claim 8,
**characterized in that**
the hanger (16, 16a) can be connected with the rail (20) by a carabiner (19).

10. The passage according to one of the claims 2 to 9,
**characterized in that**
the hanger (16, 16a) comprises a spring member.

11. The passage according to claim 10,
**characterized in that**
the spring member is formed as a tension spring (15a).

12. The passage according to one of the claims 8 to 11,
**characterized in that**
in cross-section, the bellows frame (7) is formed in the manner of a U-profile, wherein the rail (20) comprises feet (22) at both ends, which are seized in a clamping manner by the legs (7a) of the U-profile.

## Revendications

1. Passage d'intercirculation entre deux véhicules (1, 2) reliés entre eux par une connexion articulée, comprenant un soufflet (6) reliant les deux véhicules (1, 2), où le soufflet (6) entoure un dispositif de passage, par exemple sous la forme d'un pont, en particulier d'un pont articulé ou d'une plateforme avec un plateau tournant, à la manière d'un tunnel,
**caractérisé en ce que**
le dispositif de passage comporte au moins un dispositif de suspension (12) sur son côté inférieur pour la fixation d'au moins un cadre de soufflet (7) dans la région du sol.

2. Passage d'intercirculation selon la revendication 1,
**caractérisé en ce que**
le dispositif de suspension (12) comprend un organe de suspension au niveau duquel est disposé au moins une suspente (16, 16a) pour l'au moins un cadre de soufflet (7).

3. Passage d'intercirculation selon la revendication 1 ou 2,
**caractérisé en ce que**
l'organe de suspension prend la forme d'une barre de suspension (14).

4. Passage d'intercirculation selon la revendication 2 ou 3,
**caractérisé en ce que**
la suspente (16, 16a) peut être reçue de manière déplaçable par la barre de suspension (14).

5. Passage d'intercirculation selon la revendication 3 ou 4,
**caractérisé en ce que**
la barre de suspension (14) s'étend au niveau du dispositif de passage parallèlement à l'axe longitudinal central (18) du véhicule (1, 2).

6. Passage d'intercirculation selon la revendication 5,
**caractérisé en ce que**
la barre de suspension (14) s'étend à côté de la connexion articulée.

7. Passage d'intercirculation selon la revendication 6,
**caractérisé en ce que**
une barre de suspension (14) est disposée au niveau du côté inférieur du dispositif de passage de chaque côté de la connexion articulée.

8. Passage d'intercirculation selon l'une des revendications précédentes,
**caractérisé en ce que**
le dispositif de suspension comprend un rail (20), disposé sur le soufflet (6) et orienté vers le dispositif de passage, sur lequel la suspente (16, 16a) peut être disposée.

9. Passage d'intercirculation selon la revendication 8,
**caractérisé en ce que**
la suspente (16, 16a) peut être reliée au rail (20) par un mousqueton (19).

10. Passage d'intercirculation selon l'une des revendications 2 à 9,
**caractérisé en ce que**
la suspente (16, 16a) comporte un élément de ressort.

11. Passage d'intercirculation selon la revendication 10,
**caractérisé en ce que**
l'élément de ressort prend la forme d'un ressort de traction (15a).

12. Passage d'intercirculation selon l'une des revendications 8 à 11,
**caractérisé en ce que**
le cadre de soufflet (7) est formé, dans sa section transversale, à la manière d'un profilé en U, où le rail (20) comporte des pieds (22) aux deux extrémités qui sont saisis de manière serrée par les branches (7a) du profilé en U.
